# EUROPEAN PATENT APPLICATION

(11) **EP 1 294 212 A1**
(43) Date of publication of application: **19.03.2003**
(21) Application number: 02252085.2
(22) Date of filing: 22.03.2002
(51) Int. Cl.: H04Q 7/38

(54) **Method for the simultaneous uplink and downlink conveyance of information between multiple mobiles and a base station equipped with multiple antennas**

(30) Priority: 12.09.2001 US 950912
(71) Applicant: LUCENT TECHNOLOGIES INC., Murray Hill, New Jersey 07974-0636 (US)
(72) Inventor: Kogiantis, Achilles George, Madison, New Jersey, 07940 (US); Ozarow, Lawrence Howard, Morristown, New Jersey, 07960 (US)
(74) Representative: Buckley, Christopher Simon Thirsk

(57) **Abstract**

A method of scheduling a plurality of subscriber equipment based on sets of channel conditions for uplink and downlink channels of an air interface of a wireless communication system The scheduled subscriber equipment are able to simultaneously convey information at their desired information rate over the air interface to a multiple of antennas resulting in significant increase in system capacity.

## Description

### Background of the Invention

### Related Applications

Related subject matter is disclosed in the following applications concurrently filed herewith: U.S. Patent Applications entitled " Method For Multi-Antenna Scheduling of HDR Wireless Communication Systems", Serial No. and "Method Of Allocating Power For The Simultaneous Downlink Conveyance Of Information Between Multiple Antennas and Multiple Destinations", Serial No.

### Field of the Invention

The present invention relates to communication systems and more particularly to wireless communication systems.

### Description of the Related Art

Communication systems and in particular, wireless communication system are designed to meet the varying demands oftheir subscribers. Service providers, which are entities that own, operate and properly maintain the communication system, are constantly seeking ways to improve the overall performance of a communication system without incurring substantial cost increases in the operation of such communication systems. In particular, as wireless communication systems become more and more popular, service providers have to provide communication systems that allow subscribers to convey (i.e., transmit and/or receive) relatively larger amounts of information per unit time. The amount of information conveyed per unit time is the information rate. The total amount of information that can be conveyed over a system is usually referred to as a system's capacity. The amount of information that is successfully conveyed (i.e., information transmitted and received without errors) over a communication system is usually referred to as system throughput. Subscribers of a communication system with a certain system capacity are limited in the amount of information they can convey at any instant of time. Depending on the conditions of the communication channels through which the subscribers convey information, the subscriber throughput and/or capacity will not remain fixed. Therefore, there may be times when a subscriber desires to convey information at a certain information rate with a certain throughput, but will not be able to do so because of adverse channel conditions. In particular, the communication system may not be able to accommodate a subscriber desiring relatively higher information rates.

To address the problem of a subscriber's inability to convey information at a desired information rate, subscribers use equipment (e.g., cell phones or mobiles) that have multiple antennas instead of only one antenna The use of additional antennas in a subscriber's equipment gives the subscriber the ability to convey information at relatively higher rates. However, the increased capacity of the subscriber's equipment through the use of additional antennas will still be limited by the system's capacity at any instant of time. For example, a subscriber equipment having multiple antennas may have the capability and desire to convey information at a certain rate, but will be limited to a lesser rate by the system at a particular instant of time. In sum, it is the system's capacity--not the capacity of a subscriber's equipment--which ultimately governs the rate at which a subscriber conveys information. Furthermore, the use of multiple antennas in subscriber equipment complicates the design of such equipment, complicates how the subscriber equipment communicates with the communication system and increases the cost of the subscriber equipment. What is therefore needed is a method that allows subscriber equipment to convey information over a communication system at a desired information rate without having multiple antennas in the subscriber equipment.

### Summary of the Invention

The present invention provides a method that allows subscriber equipment of a wireless communication system to convey information at a desired information rate by scheduling a plurality of subscriber equipment based on channel conditions associated with the subscriber equipment. The method of the present invention provides multiple antennas (at a base station for example) that can simultaneously transmit or receive information to and from a multiple of scheduled subscriber equipment thus increasing the capacity of the communication system.

First, the method of the present invention processes received information about uplink and downlink channel conditions for the subscribers. In particular, signaling information from the multiple subscribers, responding to downlink transmissions by the multiple antennas to the subscribers, are received and processed. Uplink traffic signals from the multiple subscriber equipment are also received and processed. Sets of uplink channel conditions are determined from measured characteristics of the uplink traffic signals and the uplink signaling signals. Sets of downlink channel conditions are determined from received signaling information responding to downlink transmissions by the multiple antennas. Each set of channel conditions (uplink and/or downlink) is associated with a particular subscriber; that is, the signaling information used to generate a set of downlink channel conditions originated from that particular subscriber or the measured characteristics that form a set of uplink channel conditions were obtained from uplink signals from that particular subscriber.

The sets of uplink and downlink channel conditions are then applied to a scheduler that determines when a particular subscriber associated with a particular set of conditions is to be given access to a particular uplink and/or downlink channel. The scheduler will give access to a plurality of subscribers simultaneously by selecting various sets of channel conditions (associated with a corresponding group of subscriber equipment) allowing the selected subscribers to convey information at their desired information rate.

It should be noted that the multiple antennas need not be co-located at a particular base station and the scheduler of the present invention can be part of the base station equipment or part of other system equipment operated, maintained and owned by the service provider of the communication system

### Brief Description of the Drawings

FIG. 1 shows a portion of a wireless communication system with a scheduler that is part of base station equipment and uplink channels that allow subscribers to communicate with the base station.

FIG. 2 shows a portion of a wireless communication system with a scheduler that is part of base station equipment and downlink channels that allow the base station to communicate with the subscribers.

FIG. 3 shows a timing diagram for uplink channel traffic for the two subscribers depicted in FIG. 1.

FIG. 4 shows a timing diagram for downlink channel traffic for the two subscribers depicted in FIG. 2.

FIG. 5 shows a flowchart depicting the method of the present invention.

### Detailed Description

The present invention provides a method that allows subscriber equipment of a wireless communication system to convey information at a desired information rate by scheduling the subscriber equipment based on channel conditions associated with the subscriber equipment. The method of the present invention provides multiple antennas (at a base station for example) that can simultaneously transmit or receive information to and from a multiple of scheduled subscriber equipment thus increasing the capacity of the communication system The terms 'subscriber' and 'subscriber equipment' will hereinafter be used interchangeably to denote a subscriber of the communication system using typical subscriber equipment to convey information.

First, the method of the present invention processes received information about uplink and downlink channel conditions for the subscribers. In particular, signaling information from the multiple subscribers, responding to downlink transmissions by the multiple antennas, are received and processed. Uplink traffic signals from the multiple subscriber equipment are also received and processed. Sets of uplink channel conditions are determined from measured characteristics of the uplink traffic signals and the signaling signals. Sets of downlink channel conditions are determined from received signaling information responding to downlink transmissions by the multiple antennas. Each set of channel conditions (uplink and/or downlink) is associated with a particular subscriber; that is, the signaling information used to generate a set of downlink channel conditions originated from that particular subscriber or the measured characteristics that form a set of uplink channel conditions were obtained from uplink signals from that particular subscriber. The sets of uplink and downlink channel conditions are then applied to a scheduler that schedules the subscriber equipment associated with the selected sets channel conditions. Scheduling is determining when a particular subscriber associated with a particular set of conditions is to be given access to a particular uplink and/or downlink channel. The scheduler will give access to a plurality of subscriber equipment simultaneously by selecting various sets of channel conditions (associated with a corresponding group of subscriber equipment) that allow the selected subscribers to convey information at their desired information rate. Access refers to a subscriber equipment's ability to use the resources of the communication system to convey information to other subscriber equipment or to the system.

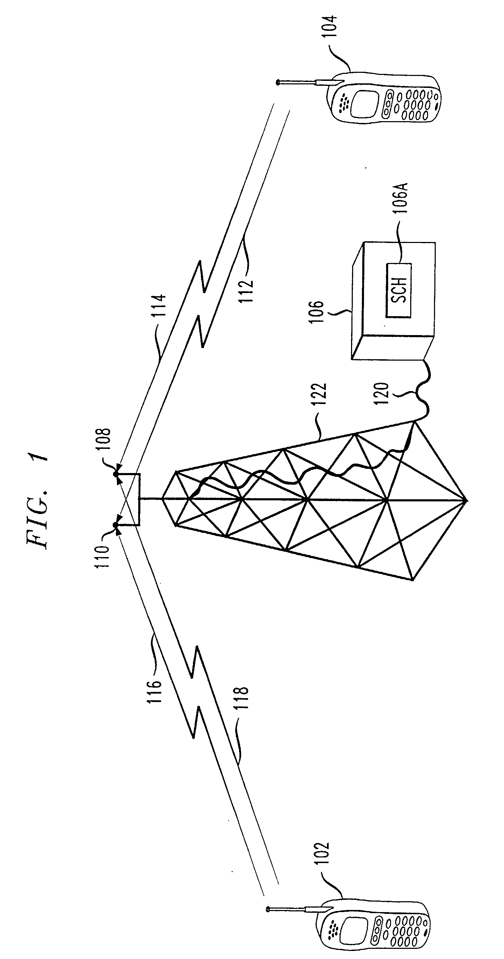

Referring now to FIG. 1, there is shown a portion of a wireless communication system comprising a base station and two subscriber equipment (102, 104) shown as cellular phones. It should be noted that the subscriber equipment is not limited to cellular phones but can be any type of communication equipment (e.g., laptop personal computer, Personal Digital Assistant (PDA)) typically used by subscribers of communication systems. The base station has base station equipment comprising tower 122 with two antennas 108 and 110 connected to electrical and electronic equipment 106 via cable 120. Cable 120 can be a coaxial cable, an electrical wire cable, an optical fiber cable or any combination thereof.

Electrical and electronic equipment 106 comprise typical radio equipment and signal processing equipment used to generate and process communication signals. Scheduler 106A forms part of equipment 106 and can be implemented as software, firmware, hardware or any combination thereof. Subscribers 102 and 104 communicate with the base station over an air interface. The air interface comprises communication channels through which traffic signals and signaling information are conveyed. The traffic signals are the signals being conveyed between different subscribers or between subscribers and base station equipment or other system equipment. System equipment are any equipment that are part of the communication system which are owned, operated and maintained by the service provider. The signaling information are information being conveyed between subscriber equipment and base station equipment. The signaling information is used to operate the communication system in accordance with a particular protocol from a standard being followed by the communication system. The communication channels constituting the air interface are uplink channels and downlink channels. The uplink traffic channels shown in FIG. 1 are channels 112, 114, 116 and 118 are communication channels through which the base station (or other system equipment) receive information transmitted by the subscriber equipment. There are also uplink signaling channels (not shown) which are used by subscriber equipment to transmit signaling information to the base station or to other system equipment. FIG. 1 shows antenna 108 simultaneously receiving traffic signals from subscribers 102 and 104 via uplink communication channels 118 and 114 respectively. Also antenna 110 is simultaneously receiving traffic signals from subscriber equipment 102 and 104 via uplink communication channels 116 and 112 respectively.

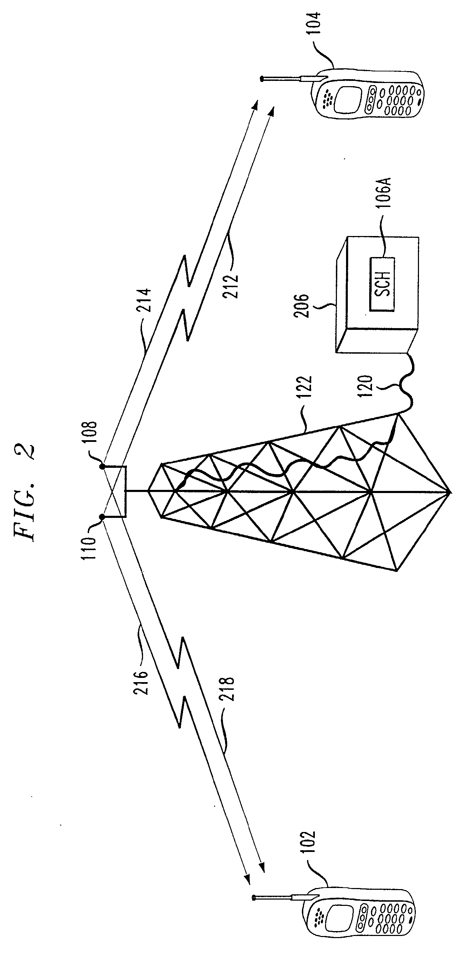

Referring now to FIG. 2, there is shown subscriber 102 and 104 communicating with the base station over downlink channels 212, 214, 216 and 218. Downlink channels are communication channels through which the base station (or other system equipment) transmits information to various subscribers. In particular, antenna 108 is simultaneously transmitting traffic signals to subscriber equipment 102 and 104 via downlink communication channels 218 and 214 respectively. Antenna 110 is simultaneously transmitting traffic signals to subscriber equipment 102 and 104 via downlink communication channels 216 and 212 respectively. Antennas 108 and 110 also transmit signaling information over downlink signaling channels (not shown) in accordance with the protocol from the standard being followed by the communication system.

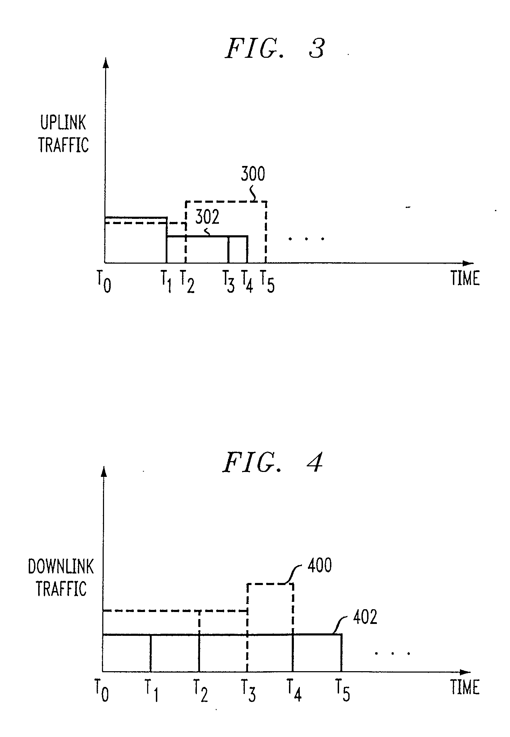

Referring now to FIG. 3, there is shown a traffic signal timing diagram for the two subscriber equipment shown in FIG. 1. The method of the present invention schedules the subscribers as shown based on sets of uplink channel conditions associated with the subscribers. It will be understood that for ease of explanation only two subscriber equipment are shown communicating with two antennas at the base station. The method of the present invention is not limited to two antennas, but applies to system equipment (e.g., base stations) having N antennas where N is an integer equal to 2 or greater. Also, the number of subscriber equipment communicating with the N antennas is not limited to 2. The traffic signal timing diagram shows the traffic information being transmitted by subscriber equipment 102 and subscriber equipment 104. The traffic information for subscriber equipment 102 is shown in dashed line as timing diagram 300. Timing diagram 302 corresponds to the traffic information being transmitted by subscriber equipment 104 over uplink channels. Note that both subscriber equipment are transmitting information at the same time and the transmissions are not synchronized to each other. The transmissions are not synchronized because they originate from different subscriber equipment which themselves are not synchronized. However, the method of the present invention also includes scheduling synchronous transmissions from different subscribers. As shown in FIG. 3, timing diagram 302 starts with a first transmission at T₀ that ends at time T₁, A second transmission starts at T₁ and ends at T₃. A third transmission starts at T₃ and ends at T₄. Timing diagram 300 (shown in dashed line) starts at T₀ and ends at T₂. A second transmission starts at T₂ and ends at T ₅.

Referring now to FIG. 4, there is shown a timing diagram of the downlink traffic for the two subscriber equipment shown in FIG. 2. The method of the present invention schedules the subscribers as shown based on sets of downlink channel conditions associated with the subscribers. Timing diagram 400 (shown in dashed line) represents the traffic being received by subscriber equipment 102 of FIG. 2. Timing diagram 402 represents the traffic information being received by subscriber equipment 104. Timing diagram 400 starts at *t*₀ with a first transmission (by the base station to equipment 102) that ends at *t*₂. A second transmission starts at *t*₂ and ends at *t*₃. A third transmission starts at *t*₃ and ends at *t*₄. Timing diagram 402 shows a first transmission to equipment 104 starting at time *t*₀ and ending at time *t*₁. A second transmission starts at time *t*₁ and ends at time *t*₂. A third transmission starts at time *t*₂ and ends at time *t*₃. A fourth transmission starts at time *t*₃ and ends at time *t*₄. A fifth transmission starts at time *t*₄ and ends at time *t*₅. The five transmissions to subscriber equipment 104 appear to contain equal amounts of traffic information; this is for illustrative purposes only. Typically, the amount of information transmitted in one transmission is totally unrelated to the amount of information transmitted in the following transmission. It should be noted that the base station transmissions over the downlink channels to the different subscribers are synchronized to each other.

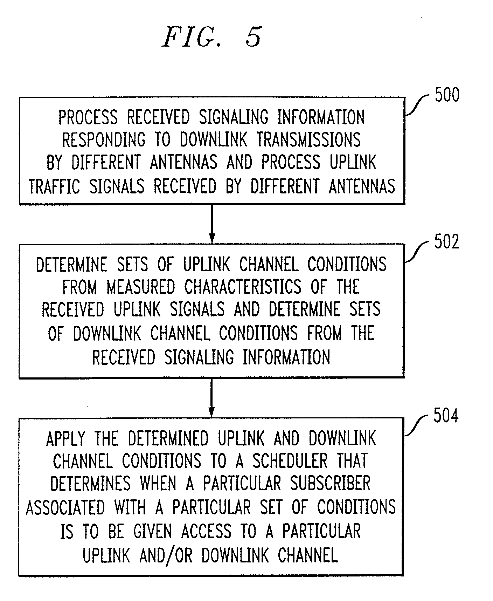

Referring now to FIG. 5, there is shown a flowchart of the steps of method of the present invention. In step 500, information received by the base station (such as the one in FIGS. 1 and 2) is processed by the base station. The received information is either traffic signals transmitted over an uplink traffic communication channel or signaling information transmitted over an uplink signaling channel. The processing of the traffic signals involve measuring various characteristics of traffic signals transmitted (by subscriber equipment) to determine the condition of the uplink traffic channel for the subscriber. The signal characteristics of the signaling signals are also measured by the base station to determine the condition of the uplink traffic channels. Examples of the signal characteristics that can be measured by the base station include the following: amplitude level, power level, phase jitter, frequency translation, channel gain, information error rate (e.g., bit error rate or BER). Other well known signal characteristics (e.g., signal propagation delay) can be included in the processing of the received signals and therefore, the signal characteristics that can be measured are not limited to the list described above. The values of the various signal characteristics measured by the base station for one subscriber are referred to as a set of uplink channel conditions for that subscriber. It is well known that base stations and other system equipment have the capability to measure characteristics of received traffic signals.

The signaling information received by the base station contain the same type of measurements of signal characteristics. The values of the characteristic measurements contained in the received signaling information for a subscriber are referred to as a set of downlink channel conditions for that subscriber. The measurements are generated by a subscriber equipment measuring characteristics of downlink signals transmitted by the base station. It is well known that subscriber equipment (such as cell phones) have the capability to measure characteristics of received traffic signals and signaling signals. The subscriber equipment transmits the various values of the measured signal characteristics to the base station as part of its signaling information. The base station processes these values by retrieving them from the received signaling information. The received uplink and signaling information also contain requests by the corresponding subscriber equipment to have access to the communication system.

In step 502, the various sets of uplink channel conditions from the measured characteristics of uplink signals received by the base station are determined. Also, the sets of downlink channel conditions received over the uplink signaling channel from the subscriber equipment are determined. In other words, the measured signal characteristics from a particular subscriber is arranged as a set of uplink channel conditions associated with that subscriber. Similarly, the measured characteristic values received by the base station over the uplink signaling channel from a particular subscriber equipment are arranged separately as a set of downlink channel conditions for each of the subscriber equipment that transmitted such information. Each particular set of channel conditions is associated with a subscriber. Once these sets of channel conditions are determined, the method of the present invention applies them to the scheduler.

In step 504, the uplink channel conditions and the downlink channel conditions are applied to a scheduler that schedules when a particular subscriber associated with a particular set of channel conditions is to be given access to a particular uplink and/or downlink channel. The scheduler is represented by module 106A (implemented with software, firmware, hardware or a combination thereof) which is integrated in the base station equipment 106 and determines when a selected set of subscriber equipment corresponding to a set of channel conditions is to be allowed to convey information over the downlink and uplink channels of the air interface. For uplink scheduling, the scheduler schedules one or a multiple of subscribers and allows these subscribers to simultaneously transmit signals to both antennas, or in the general case, to N antennas. For the downlink scheduling, the two antennas (or the N antennas in the general case) transmit simultaneously to the multiple subscribers selected by the scheduler.

The scheduler can use various criteria (established by the service provider) to determine the scheduling of a particular subscriber. For example, certain subscribers may desire to convey information at a certain information rate. The scheduler can schedule a particular set of subscribers whose aggregate information rate is higher than any other set of subscribers or single subscriber requesting access to the communication system. Another method of selecting subscribers is for the scheduler to schedule a set of subscribers having a higher downlink information rate than any other set of subscriber equipment requesting access to the communication system. Also, the scheduler schedules another set of subscribers having a higher uplink information rate than any other set of subscriber equipment from the multiple subscribers requesting access to the communication system In sum, the scheduler processes the channel conditions associated with all of the subscribers requesting access to the system and selects those sets of channel conditions (associated with their corresponding subscribers) that yield as high as possible aggregate information rate. The aggregate information rate is the total of the uplink and downlink information rates. The scheduling of the subscribers is thus based on the sets of channel conditions (uplink and/or downlink) associated with the subscribers. It should be noted that in order for the scheduler to schedule a particular set of subscribers, the communication system has to have the requisite resources for the scheduled set. Sufficient amount of resources such as power allocated to each of the antennas and the bandwidth of downlink and uplink channels should be available to the communication system

The communications between the multiple antennas and the multiple subscribers form a Multiple Input Multiple Output (MIMO) system that inherently carries relatively higher capacity than separate subscribers conveying information to separate antennas at the base station. In essence, the method of the present invention uses a scheduler to perform Distributed Multi-Antenna Scheduling (DMAS) for a multiple of subscriber equipment which are able to simultaneously convey information to multiple antennas where such antennas are not necessarily co-located. Co-location refers to antennas situated proximate to each other (e.g., separated by distances of several hundred meters or less). It will be readily obvious that not all of the N antennas of a DMAS system need be physically located at a base station. Some of the antennas can be located at other places in the communication system It should be noted that the antennas shown in FIGS. 1 and 2 and generally base stations comprising N antennas can be configured and designed with the proper system equipment to perform beamforming operations. In other words, the method of the present invention can be implemented with antennas that simultaneously transmit to a plurality of subscribers by combining their transmitted signals so as to form a radiation beam pattern covering a geographic area of a cell or a sector of a cell in which the subscribers are located.

## Claims

1. A method for the simultaneous conveyance of information between multiple subscriber equipment and multiple antennas of a wireless communication system, the method comprises the steps of:
scheduling a plurality of subscriber equipment to communication channels of the communication system based on sets of channel conditions associated with the subscribers.

2. The method of claim 1 where the step of scheduling a plurality of subscribers comprises:
scheduling the subscriber equipment to uplink communication channels based on sets of uplink channel conditions received over uplink traffic channels being used by the subscribers; and
scheduling the subscriber equipment to downlink communication channels based on sets of downlink channel conditions received over uplink signaling channels responding to downlink channel transmissions to the subscribers.

3. The method of claim 2 where the step of scheduling the subscriber equipment to uplink communication channels comprises the steps of:
receiving uplink signals over the uplink communication channels;
processing the received signals by measuring various signal characteristics of the signals;
determining sets of uplink channel conditions from the measured channel conditions; and
applying the sets of uplink channel conditions to a scheduler.

4. The method of claim 3 where the received uplink signals comprise traffic signals and signaling signals from the subscribers.

5. The method of claim 2 where the step of scheduling the subscriber equipment to downlink communication channels comprises the steps of:
receiving, over an uplink communication channel, signaling information containing signal characteristic measurements for signals transmitted over the downlink channel by system equipment;
processing the signal characteristic measurement;
determining sets of downlink channel conditions from the signal characteristic measurements; and
applying the sets of downlink channel conditions to a scheduler.

6. The method of claim 1 where the scheduled set of subscriber equipment have an aggregate information rate that is higher than any other set of subscriber equipment requesting access to the communication system

7. The method of claim 6 where the scheduled set comprises:
a set of subscriber equipment requesting access to the communication system which set of subscriber equipment has a higher downlink information rate than any other set of subscriber equipment requesting access to the communication system; and
a set of subscriber equipment requesting access to the communication system which set of subscribers has a higher uplink information rate than any other set of subscriber equipment requesting access to the communication system
